(19) Europäisches Patentamt
European Patent Office
Office européen des brevets

(11) **EP 3 920 377 A1**

(12) **EUROPÄISCHE PATENTANMELDUNG**

(43) Veröffentlichungstag:
**08.12.2021 Patentblatt 2021/49**

(51) Int Cl.:
***H02K 1/27*** *(2006.01)*

(21) Anmeldenummer: **20178496.4**

(22) Anmeldetag: **05.06.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Maxon International AG**
**6072 Sachseln (CH)**

(72) Erfinder: **Kreher, Johannes**
**6078 Lungern (CH)**

(74) Vertreter: **Grünecker Patent- und Rechtsanwälte PartG mbB**
**Leopoldstraße 4**
**80802 München (DE)**

(54) **ELEKTROMOTOR MIT GERINGER ROTORDICKE**

(57)      Die vorliegende Erfindung betrifft einen Elektromotor, insbesondere bürstenlosen Gleichstrommotor, mit einem Stator und einem Rotor, der einen Rotorrückschluss und mit dem Rotorrückschluss verbundene Rotormagnete aufweist. Ein solcher Elektromotor soll verbessert werden. Hierzu ist vorgesehen, dass die Rotormagnete jeweils in einer Aufnahme des Rotorrückschlusses angeordnet sind und ein minimaler Abstand einer Aufnahme zu einer dem Stator abgewandten Seite des Rotorrückschlusses kleiner ist als das 0,5-fache einer maximalen, zwischen zwei Rotormagneten vorhandenen Dicke des Rotorrückschlusses. Die Erfindung bezieht sich auf einen entsprechenden Rotor für einen solchen Elektromotor.

Fig. 1

**EP 3 920 377 A1**

**Beschreibung**

Die vorliegende Erfindung betrifft einen Elektromotor, insbesondere bürstenlosen Gleichstrommotor, mit einem Stator und einem Rotor, der einen Rotorrückschluss und mit dem Rotorrückschluss verbundene Rotormagnete aufweist.

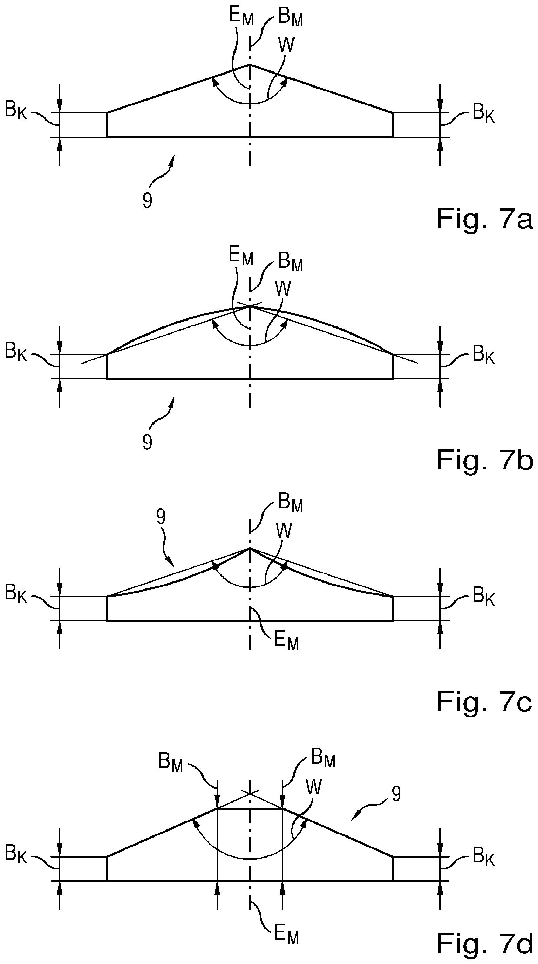

Aus der US 2014/0312745 A1 sind verschiedene Ausführungsformen eines bürstenlosen DC-Motors bekannt. Anhand der Fig. 7 ist ein mit Rotormagneten bestückter, innerhalb des Stators drehender, Rotor beschrieben. Die Rotormagnete sind als im Querschnitt rechteckförmige Permanentmagnete ausgestaltet, die auf der Mantelfläche einer Rückschlusshülse im Abstand zueinander angeordnet sind. Im konkreten Ausführungsbeispiel sind 16 Rotormagnete verwendet worden. Der Stator ist mit 15 Wicklungsköpfen bestückt. Die Rotormagnete und die Wicklungsköpfe sind gleichmäßig am Umfang verteilt. Der Rückschluss hat eine relativ gleichmäßige Dicke. Diese Anordnung führt dazu, dass der Rückschluss nicht optimal genutzt wird, da es im Rückschluss Bereiche gibt, welche zu jedem Zeitpunkt eine geringe Magnetflussdichte aufweisen. Die US 2014/0312745 A1 enthält auch Ausführungsbeispiele, bei denen der Stator mit mehreren Statormagneten versehen ist, während der Rotor entsprechende Wicklungen aufweist. Die zum Rückschluss weisende Seite der Statormagnete weist einen Dachwinkel auf. Der Statorrückschluss ist an seiner Innenmantelfläche mit einer entsprechenden polygonalen Form ausgeführt, so dass die Statormagnete formgenau in diese eingefügt sind. Hierdurch soll eine bessere Ausrichtung der Statormagnete erzielt werden.

Rotoren von derartigen Elektromotoren benötigen einen gewissen Rotorquerschnitt/eine gewisse Rotordicke, um den nötigen Permanentmagnetfluss im Motor zu erzeugen. Allerdings steigt mit größerem Rotorquerschnitt auch die Trägheit, das Gewicht und das benötigte Volumen an. Insbesondere bei Außenläufern hat dieses negative Einflüsse auf den Luftspaltdurchmesser und somit auch die aktive Luftspaltfläche und den Hebelarm (bei gegebenem Außendurchmesser des Motors). Im Motordesign ist man daher bestrebt, den Luftspaltdurchmesser so groß wie möglich auszuführen. Bei Innenläufern besteht die Zielsetzung eher in der Schaffung von zusätzlichem Bauraum, z.B. zur Verwendung von Antriebswellen mit größerem Durchmesser.

Es ist daher die Aufgabe der vorliegenden Erfindung, einen Elektromotor der eingangs genannten Art mit verbesserten Bauraumverhältnissen bereitzustellen.

Diese Aufgabe wird bei einem gattungsgemäßen Elektromotor durch die kennzeichnenden Merkmale des Anspruchs 1 gelöst. Hierzu sind die Rotormagnete jeweils in einer Aufnahme des Rotorrückschlusses angeordnet, wobei ein minimaler Abstand einer Aufnahme zu einer dem Stator abgewandten Seite des Rotorrückschlusses kleiner ist als das 0,5-fache einer maximalen, zwischen zwei Rotormagneten vorhandenen Dicke des Rotorrückschlusses. Die Erfinder haben nämlich erkannt, dass bei bekannten Elektromotoren der Rotorrückschluss, insbesondere im Bereich hinter den Rotormagneten nicht vollständig genutzt wird. Bei der Erfindung wird durch eine optimierte Geometrie das nicht genutzte Volumen des Rückschlusses durch Magnetvolumen ersetzt. Hierzu sind die Aufnahmen vorgesehen, in die die Rotormagnete vertieft in den Rotorrückschluss eingesetzt werden. In diesen Bereichen kommen demnach die Rotormagnete näher an die Außenfläche des Rotorrückschlusses heran, während in den Bereichen zwischen den Rotormagneten bzw. der Aufnahmen eine größere Dicke des Rotorrückschlusses verbleibt. Ein entsprechender Magnetfluss kann trotz dieser Ausgestaltung entsprechend aufrechterhalten werden. Der minimale Abstand ist selbstverständlich nach unten begrenzt durch Festigkeitsanforderungen, damit die Funktionalität als Rotor gewahrt bleibt. Die Rotormagnete und die entsprechenden Aufnahmen des Rotorrückschlusses sind bevorzugt derart ausgeformt, dass ein Rotormagnet und die zugehörige Aufnahme möglichst bündig aneinander angeordnet werden können. Hierdurch ist der Abstand zwischen den Rotormagneten und den entsprechenden Aufnahmen an jeder Position des Umfangs minimal und es ergibt sich kein Spalt zwischen diesen. Im Ergebnis wird die Gesamtdicke des Rotors mittels der Erfindung reduziert. Die Vorteile bei einem Außenläufer bestehen z.B. darin, dass der Luftspaltdurchmesser im Vergleich zu klassischen Anordnungen bei Beibehaltung des Außendurchmessers des Elektromotors vergrößert werden kann. Im Ergebnis wird auch die aktive Luftspaltfläche und der Hebelarm vergrößert. Bei ansonsten gleichen Randbedingungen kann durch die Erfindung die Motorkonstante um bis zu ca. 10 % erhöht werden. Bei Innenläufern wird mehr Bauraum im Inneren geschaffen, was eine robustere Konstruktion bei ansonsten gleichen Randbedingungen erzielt.

Gemäß einer bevorzugten Ausführungsform kann der minimale Abstand einer Aufnahme zu der dem Stator abgewandten Seite des Rotorrückschlusses kleiner sein als das $0,\overline{3}$-fache der maximal zwischen zwei Rotormagneten vorhandenen Dicke des Rotorrückschlusses. Hierdurch werden die Rotormagnete noch weiter in den Rotorrückschluss eingefügt, so dass bevorzugt nur noch der für die notwendige Festigkeit verbleibende minimale Abstand, d.h. die minimale Dicke, am Rotorrückschluss vorhanden ist. Dies führt zu einer entsprechend schmalen Ausführung des Rotors.

Von Vorteil ist eine Variante, bei der ein Rotormagnet im Querschnitt einen Dickenverlauf derart aufweist, dass die maximale Dicke in einem mittleren Querschnittsbereich und die minimale Dicke in einem am Rand befindlichen Querschnittsbereich liegt. Hierdurch sind sowohl ein verbessertes Einsetzen des Rotormagnets in die Aufnahme des Rotorrückschlusses als auch eine Vergrößerung der Magnetfluss-Austrittsfläche auf der Rotorrückschlussseite des Rotormagneten möglich.

Günstigerweise kann hierbei der Rotormagnet im Querschnitt einen Dickenverlauf derart aufweisen, dass sich die Dicke vom mittleren Bereich hin zum an Rand befindlichen Querschnittsbereich gleichbleibend oder stetig verändert.

Die Aufnahme im Rotorrückschluss weist dann bevorzugt eine daran angepasste Form auf. Die zum Rotorrückschluss weisende Magnetfluss-Austrittsfläche kann dachförmig, d.h. dreiecksförmig, gebogen (konvex oder konkav) oder auch mit einer stumpfen Spitze wie bei einem Trapez, ausgestaltet sein. Die Vorgabe gilt bevorzugt für sämtliche Rotormagnete.

Vorteilhafterweise kann hierbei der Rotormagnet zu einer diesen in zwei Hälften unterteilenden Mittelebene einen spiegelsymmetrischen Dickenverlauf aufweisen. Möglich ist demnach hierbei, dass der Rotormagnet an dieser Mittelebene seine maximale Dicke und den am weitesten zur Mittelebene entfernten Seitenrändern seine minimale Dicke aufweist.

Es besteht gemäß einer Variante auch die Möglichkeit, einen (oder alle) Rotormagneten aus mindestens zwei Teilmagneten zusammenzusetzen. Hierdurch ist es z.B. möglich, die Anisotropie-Richtungen des Rotormagneten leicht zu variieren.

Je formgenauer der Rotormagnet in die Aufnahme eingesetzt ist, desto besser ist dies bspw. für den magnetischen Fluss. Deshalb ist es gemäß einer Ausführungsform vorgesehen, dass ein (oder alle) Rotormagnet(e) derart in der zugehörigen Aufnahme im Rotorrückschluss angeordnet ist bzw. sind, dass sich mindestens 50 % der Querschnittsfläche des Rotormagneten mit der Querschnittsfläche der Aufnahme überdecken.

In einer weiteren bevorzugten Ausführungsform kann diese Überdeckung mindestens $66,\overline{6}$ % betragen. Entsprechend ist ein großer Teil eines Rotormagneten in dem Rotorrückschluss integriert.

Die Befestigung der Rotormagneten im Rotorrückschluss kann mittels Kleben erfolgen. Es besteht aber auch die Möglichkeit, in den Bereichen zwischen den Rotormagneten Haltenasen etc. anzubringen, die eine Befestigung der Rotormagnete im Rotorrückschluss verbessern. Darüber hinaus besteht auch die Möglichkeit, die Rotormagnete vollständig innerhalb des Rotorrückschlusses anzuordnen, so dass diese auch auf der dem Stator zugewandten Seite von einer dünnen Schicht des Rotorrückschlusses abgedeckt sind. Der Rotorrückschluss besteht üblicherweise aus einem Blechpaket, wobei dann die Aufnahmen durch hintereinander angeordnete Fensteraussparungen an den einzelnen Blechen gebildet sind.

Bei einer zu bevorzugenden Ausführungsform kann die Querschnittsfläche der Aufnahme eine Dreiecksform aufweisen, wobei zumindest ein Teilbereich des oder der Rotormagnete(n) eine daran angepasste Form aufweist bzw. aufweisen und demnach passgenau in die Aufnahme eingesetzt ist oder sind. Der Rotorrückschluss liegt dann satt an der entsprechend zugeordneten Magnetfluss-Austrittsfläche des Rotormagneten an.

Als Rotormagnete werden bevorzugt unidirektionale anisotrope Seltenerd-Magnete verwendet, insbesondere aus Neodym-Eisen-Bor (NdFeB) oder Samarium-Cobalt (SmCo). Es ist aber alternativ auch denkbar, die Erfindung mit anisotropen Seltenerd-Magneten mit nicht einheitlicher Anisotropie-Richtung auszuführen. Anisotrope Magnete können nur in der Anisotropie-Richtung magnetisiert werden, dadurch ist die Anisotropie und die Magnetisierungsrichtung bis auf die Polarisation gleichbedeutend.

Der oder die Rotormagnet(e) weist bzw. weisen eine Breite A und der Rotorrückschluss eine maximale Dicke B zwischen zwei Rotormagneten auf. Der Magnetfluss aus der halben Magnetbreite A/2 wird durch den Rotorrückschluss mit der maximalen Dicke B geführt. Die Flussdichte im Rotormagneten bei normaler Betriebsweise beträgt bei einer bevorzugten Ausführungsform etwa 1T. Die Sättigungsflussdichte des Rückschlussmaterials bewegt sich bevorzugt im Bereich von 1,5 bis 2T, je nach Material. Es ist daher gemäß einer Ausführungsform von Vorteil, wenn ein Verhältnis V von A zu B im Bereich von 3 bis 4 liegt. Das Verhältnis V stellt eine wichtige Größe für die erfindungsgemäße Anordnung dar. Der Wert V ist abhängig von Magnetgrade (Remanenz), Magnetdicke, Rückschlussmaterial (Sättigungsflussdichte) und Luftspalt (magnetischer Widerstand). Das Sättigungsverhalten des Rückschlussmaterials stellt keine scharfe Grenze dar. Genauso ergeben sich je nach Anforderungsprofil unterschiedliche Motorauslegungen. Aus diesen Gründen gibt es einen sinnvollen Bereich für das Verhältnis V und keinen festen Wert.

Derartige Motoren werden sehr häufig mit größerer Polzahl betrieben. Die Anzahl der Rotormagnete kann z.B. mindestens 14 betragen. Um hierbei eine Optimierung des Aufnahmequerschnittes und Rotormagnetquerschnittes zu erzielen, ist bei einer Variante vorgesehen, dass zwei auf der Rückschlussseite des oder der Rotormagneten jeweils an der Stelle der minimalen Dicke des oder der Rotormagneten und an der nächstliegenden Stelle der maximalen Dicke des Rotormagneten anliegende Linien einen Winkel W im Bereich von 100° bis 160°, bevorzugt von 110° bis 150°, und weiter bevorzugt von 112° bis 124°, einschließen. Bei einer Dreiecksform oder einer Trapezform ist dieser Winkel W am einfachsten abzugreifen. Bei gekrümmtem Verlauf dieser Fläche (konkav oder konvex) erfolgt die Ermittlung am besten mittels der gedachten anliegenden Linien. Dieser Winkel W ergibt sich für große Polzahlen in Abhängigkeit des minimalen Abstands C der Aufnahme zu der dem Stator abgewandten Seite des Rotorrückschlusses, sofern der Rotormagnet eine an die Aufnahme angepasste Form aufweist. Bestimmt wird diese bevorzugt nach folgenden Gleichungen:

$$W = 2 \cdot \arctan(A/2/(B-C)) = 2 \cdot \arctan(A \cdot V/2/(A-C \cdot V)) = 2 \cdot \arctan(V \cdot B/2/(B-C)) = 2 \cdot \operatorname{arccot}(2/V - 2 \cdot C/A)$$

Günstigerweise ergibt sich dann gemäß einer Ausführungsform eine Gesamtbreite der Rückschlussseite des Rotormagneten, die dem 1,5-fachen bis 3,0-fachen, bevorzugt dem 1,7-fachen bis 2,5-fachen, der maximalen Dicke des Rotorrückschlusses zwischen zwei Rotormagneten entspricht. Unter Gesamtbreite ist hier die tatsächliche Breite entlang der Oberfläche gemeint. Diese kann sich aus mehreren Teilbereichen (Teilbreiten) zusammensetzen. Je größer diese Gesamtbreite ist, desto größer ist die gesamte Magnetfluss-Austrittsfläche, die dem Rotorrückschluss zugewandt ist.

Gemäß einer Ausführungsform kann der Rotor als um den Stator umlaufender Außenrotor ausgebildet sein. Hier liegt der Vorteil maßgeblich in dem Vergrößerungspotential für den Luftspaltdurchmesser.

Eine weitere Ausführungsform sieht vor, dass der Rotor als innerhalb des Stators laufender Innenrotor ausgebildet ist. Der Rotor kann aufgrund größeren Platzangebots robuster ausgeführt werden, insbesondere der Wellendurchmesser lässt sich vergrößern und auch die Lagerung stabiler ausführen. Alternativ lassen sich auch grössere Hohlwellen verwenden, welche in manchen Anwendungen für Kabeldurchführungen verwendet werden können.

Die vorliegende Erfindung bezieht sich auch auf einen Rotor für einen Elektromotor nach einem der Ansprüche 1 bis 14, mit einem Rotorrückschluss und in Aufnahmen des Rotorrückschlusses angeordneten Rotormagneten, wobei ein minimaler Abstand einer Aufnahme zu einer dem Stator abgewandten Seite des Rotorrückschlusses kleiner ist als das 0,5-fache einer maximalen, zwischen zwei Rotormagneten vorhanden Dicke des Rotorrückschlusses.

Prinzipiell ist es möglich, den Rotor als Linearrotor und den Stator als Linearstator auszugestalten.

Die erfindungsgemäße Ausgestaltung lässt sich aber auch umkehren, indem der Stator mit Statormagneten und einem Statorrückschluss und der Rotor mit entsprechenden Wicklungen versehen ist. Dann könnte mittels der erfindungsgemäßen Vorgabe der Stator dünner ausgeführt werden. Bei gleichbleibendem Außendurchmesser würden sich dann stärkere Innenläufermotoren erzeugen lassen.

Im Folgenden werden Ausführungsformen der vorliegenden Erfindung anhand von Zeichnungen näher erläutert. Es zeigen:

Fig. 1          eine schematische Teilansicht eines erfindungsgemäßen Elektromotors im Querschnitt,

Fig. 2          eine Darstellung der Magnetflusslinien im Betrieb eines Elektromotors gemäß Fig. 1,

Fig. 3          eine zweite Ausführungsform eines Elektromotors in einer geschnittenen Teilansicht,

Fig. 4          eine weitere Ausführungsform eines erfindungsgemäßen Elektromotors in einer geschnittenen Teilansicht.,

Fig. 5          eine Frontansicht eines erfindungsgemäßen, aus zwei Teilmagneten zusammengesetzten Rotormagneten,

Fig. 6          eine Vorderansicht eines erfindungsgemäßen Rotormagneten mit nicht einheitlicher Anisotropie-Richtung und

Fig. 7a - 7d      verschiedene Querschnittsformen erfindungsgemäßer Rotormagnete.

Der prinzipielle Aufbau von bürstenlosen Gleichstrommotoren ist im Stand der Technik bestens bekannt, weshalb in der Folge nur auf die erfindungswesentlichen Aspekte eingegangen wird.

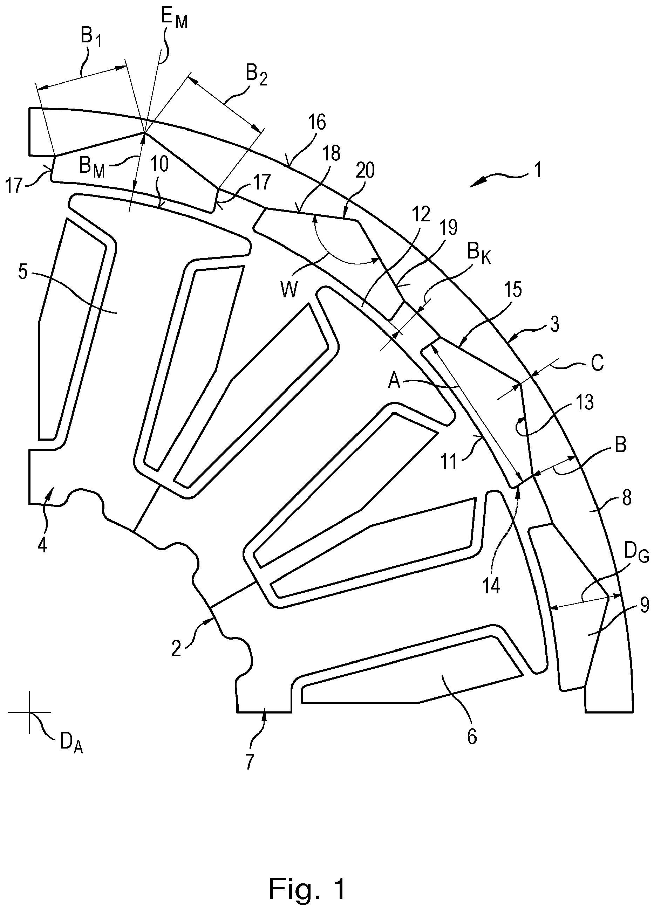

Die Hauptbestandteile eines bürstenlosen Gleichstrommotors 1 sind ein Stator 2 und ein in Fig. 1 als Außenläufer ausgestalteter Rotor 3. Der Rotor 3 weist eine nicht näher dargestellte, durch das Innere des Stators 2 geführte Welle auf. Der Stator 2 weist einen aus einem Blechpaket bestehenden Eisenkörper 4 auf, der an seinem radialen Umfang mehrere Statorzähne 5 ausformt. Um die Statorzähne 5 sind Statorspulen 6 angeordnet. Während die einzelnen Statorzähne 5 im Abstand zueinander angeordnet sind, ist das Statorjoch zu einer Rückschlusshülse verbunden. Die Statorspulen 6 sind mittels einer nicht näher gezeigten Ansteuerung mit Strom beaufschlagbar.

Der koaxial um den Stator 2 umlaufende Rotor 3 umfasst im Wesentlichen einen aus einem Blechpaket bestehenden Rotorrückschluss 8 und auf der Innenseite des Rotorrückschlusses 8 im Abstand zueinander angeordnete Rotormagnete 9. Als Blechmaterial werden für den Rotorrückschluss 8 magnetflussleitfähige Materialien, insbesondere Eisenwerkstoffe eingesetzt. Im vorliegenden Ausführungsbeispiel weist der Rotor 3 insgesamt sechszehn in gleichmäßigen Winkelschritten zueinander angeordnete Rotormagnete 9 auf. Die Anzahl der Statorspulen 6 ist entsprechend geringer und in der Regel durch die Phasenzahl teilbar. In dieser Ausführung beträgt die Anzahl Statorspulen 6 insgesamt zwölf und ist durch die Anzahl Phasen, in diesem Fall drei, teilbar. Als Rotormagnete 9 werden im vorliegenden Ausführungsbeispiel unidirektionale anisotrope Seltenerd-Magnete verwendet. Diese bestehen aus Neodym-Eisen-Bor (NdFeB). Alternativ kann auch Samarium-Kobalt (SmCo) eingesetzt werden.

Zwischen den radial nach außen weisenden Flächen 10 der Statorzähne 5 und den den Statorzähnen 5 zugewandten Flächen 11 ist ein Luftspalt 12 geformt. Dieser Luftspalt 12 hat einen Luftspaltdurchmesser, der dem zweifachen Abstand von der Drehachse $D_A$ bis zur Mitte des Luftspaltes entspricht. Die Fläche 10 kann eine an den Luftspaltdurchmesser angepasste konvexe Krümmung und die Fläche 11 eine an den Luftspaltdurchmesser angepasste konkave Krümmung aufweisen. Jeder Rotormagnet 9 ist in einer im Querschnitt dreieckförmigen Aufnahme 13 des Rotorrückschlusses 8 angeordnet. Das Blechpaket des Rotorrückschlusses 8 formt quasi für jeden Rotormagnet eine im Querschnitt dreiecksförmige Nut aus, in die ein Teilbereich des Rotormagnets 9 passgenau eingesetzt und mit dem Rückschluss 8 verbunden (z.B. geklebt) ist.

Der Gesamtquerschnitt eines Rotormagneten 9 setzt sich im Wesentlichen zusammen aus zwei Teilquerschnitten, nämlich einem im Wesentlichen rechteckigen Querschnittsteil und einem dreiecksförmigen Querschnittsteil 15. Der dreiecksförmige Querschnittsteil 15 ist exakt an den dreiecksförmigen Querschnitt der Aufnahme 13 angepasst und lediglich der rechteckförmige Querschnittsteil 14 steht an der Innenseite des Rotorrückschlusses 8 nach innen über. Zwischen zwei Aufnahmen 13 bzw. zwei Rotormagneten 9 weist der Rotorrückschluss 8 seine maximale Dicke B auf. In der Mitte der Aufnahme 13 und des Rotormagneten 9 weist der Rotorrückschluss 8 seine minimale Dicke C auf. Bei der minimalen Dicke C handelt sich hierbei auch um den minimalen Abstand der Aufnahme 13 zu der dem Stator 2 abgewandten Seite 16 des Rotorrückschlusses 8. Aufgrund des formgenauen Einsetzens der Rotormagnete 9 in die Aufnahmen 13 handelt es sich gleichzeitig auch um den minimalen Abstand des Rotormagneten 9 zur Seite 16.

Jeder Rotormagnet 9 ist zu einer diesen in zwei Teile unterteilenden Mittelebene $E_M$ symmetrisch ausgebildet. Des Weiteren weist der Rotormagnet 9 an dieser Mittelebene $E_M$ seine maximale radiale Breite $B_M$ auf. An den am weitesten von dieser Mittelebene $E_M$ entfernten Seiten 17 weist der Rotormagnet 9 seine minimale radiale Breite $B_K$ auf. Die minimale Breite $B_K$ ist selbstverständlich kleiner als die maximale Breite $B_M$, wobei mit zunehmendem Abstand zur Mittelebene $E_M$ die Breite des Rotormagneten im vorliegenden Fall gleichbleibend abnehmend ist. Der Rotormagnet 9 ist soweit in dem Rotorrückschluss 8 eingesetzt, dass die Bedingung $B > 2 \times C$ erfüllt ist. Im vorliegenden Fall ist sogar die Bedingung $B > 3 \times C$ erfüllt. Durch diese Maßnahme wird die Gesamtdicke $D_G$ vom Rotorrückschluss 8 und Rotormagnet 9 gegenüber herkömmlichen Rotorausgestaltungen maßgeblich reduziert. Im Vergleich zu herkömmlichen Anordnungen kann bei gleichbleibendem Außendurchmesser des Rotorrückschlusses 8 mittels der beschriebenen Ausgestaltung ein größerer Luftspaltdurchmesser erzielt werden. Es geht demnach nicht um die Erhöhung des Magnetvolumens, sondern darum, im Vergleich zu herkömmlichen Ausgestaltungen das Magnetvolumen aufrechtzuerhalten, aber die Gesamtdicke $D_G$ zu reduzieren.

Die Rotormagnete 9 weisen eine Breite A auf. Der Magnetfluss aus der halben Magnetbreite A/2 wird durch den Rotorrückschluss 8 an seiner maximalen Dicke B geführt. Die Flussdichte im Rotormagneten 8 bei normaler Betriebsweise ist etwa 1 T, die Sättigungsflussdichte des Rückschlussmaterials bewegt sich im Bereich von 1,5 bis 2 T in Abhängigkeit des verwendeten Materials. Das Verhältnis V von Magnetbreite A zur maximalen Dicke B des Rotorrückschlusses 8 stellt eine wichtige Größe für diese Anordnung dar und sollte für eine vorteilhafte Auslegung zwischen 3 und 4 liegen. Im vorliegenden Fall beträgt es 3,5. Die Dreiecksform des dreiecksförmigen Querschnittteils 15 sorgt dafür, dass die Gesamtfläche der Teilbereiche 18 und 19 der Rückschlussseite 20 (Magnetfluss-Austrittsfläche) des Rotormagneten 8 größer ist, als die dem Stator 2 zugewandte Fläche 11. Dabei wird darauf geachtet, dass die Gesamtbreite $B_1$ oder $B_2$ der halben Rückschlussseite 20 des Rotormagneten 8 dem 1,5-fachen bis 3,0-fachen, bevorzugt dem 1,75-fachen bis 2,5-fachen der maximalen Dicke B des Rückschlusses 8 zwischen zwei Rotormagneten 9 entspricht. Im vorliegenden Fall beträgt der Wert 2,2. Die beiden Teilbereiche 18 und 19 schließen hierbei einen Winkel Wein, der im Bereich von 100° bis 160°, bevorzugt von 110° bis 150° und weiter bevorzugt von 112° bis 124° einschließt. Im vorliegenden Fall beträgt der Winkel 118°. Die Rotormagnete 9 füllen die Aufnahmen 13 vollständig aus, wodurch im Wesentlichen eine 100%ige Überdeckung der Querschnittsflächen des Rotormagneten 9 und der Querschnittsfläche der Aufnahme 13 vorhanden ist, wodurch die Bedingung von mindestens 50 % und bevorzugt mindestens $66,\overline{6}$ % erfüllt sind.

Der minimale Abstand C einer Aufnahme 13 zu der dem Stator 2 abgewandten Seite 16 des Rotorrückschlusses ist kleiner als das 0,5-fache der maximalen Dicke B zwischen zwei Rotormagneten 9 und bevorzugt kleiner als das 0,3-fache dieser Dicke B. Im vorliegenden Fall beträgt der Abstand C das 0,2-fache der maximalen Dicke B. Der Winkel W wird mittels der folgenden Formeln bestimmt:

$$W = 2*\arctan(A/2/(B-C)) = 2*\arctan(A*V/2/(A-C*V)) = 2*\arctan(V*B/2/(B-C)) = 2*\text{arccot}(2/V - 2*C/A)$$

Der Winkel W ist demnach abhängig vom Verhältnis V zu dem Abstand C und der Magnetbreite A. Diese Näherungsformeln gelten für große Polzahlen, die bei derartigen Elektromotoren 1 jedoch vielfach vorhanden sind.

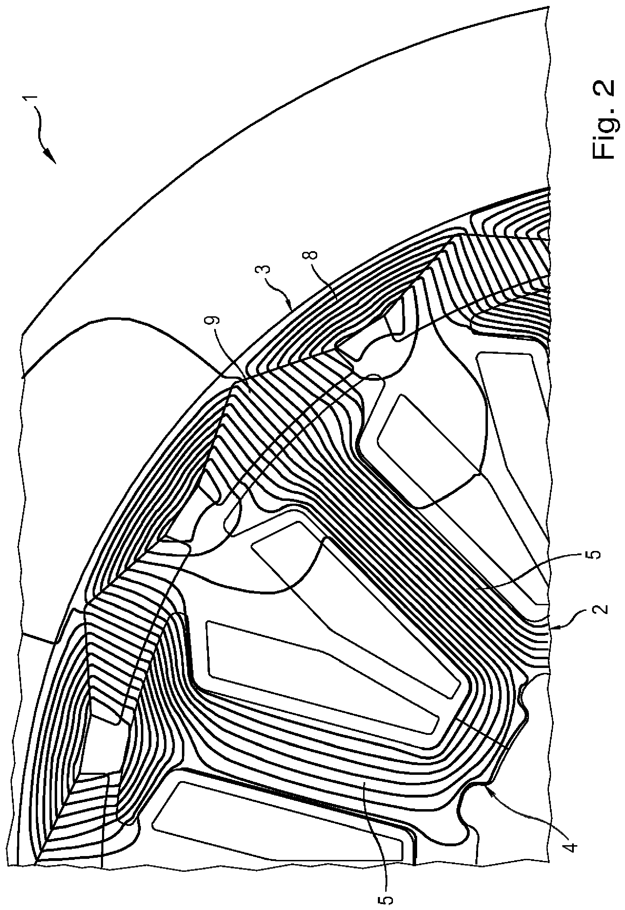

Im Folgenden wird anhand der Fig. 2 noch einmal näher auf die Wirkungsweise der vorliegenden Erfindung eingegangen. Die Fig. 2 zeigt zu einem bestimmten Zeitpunkt den während des Motorbetriebs vorhandenen Magnetfluss.

Der mit der Bezugsziffer 5 versehene Statorzahn fluchtet in dieser Stellung exakt mit dem mit der Bezugsziffer 9 versehenen Rotormagneten. Es ist gut zu erkennen, dass die magnetischen Feldlinien beim Austritt aus den Teilbereichen 18 und 19 sehr dicht verlaufen und im Bereich der minimalen Dicke C des Rotorrückschlusses 8 nur ein geringfügiges Auffächern des Magnetflusses stattfindet. Bei herkömmlichen Ausgestaltungen ist der Magnetfluss im Bereich der Mittelebene $E_M$ eines Rotormagneten sehr stark aufgefächert und das führt dazu, dass der Rotorrückschluss an dieser Stelle nur unzureichend genutzt wird. Durch die erfindungsgemäße Ausgestaltung erfolgt auch in diesem Bereich eine bessere Ausnutzung des Rotorrückschlusses 8 und somit eine Optimierung, ohne im Vergleich zu herkömmlichen Ausgestaltungen den Permanentmagnetfluss zu reduzieren.

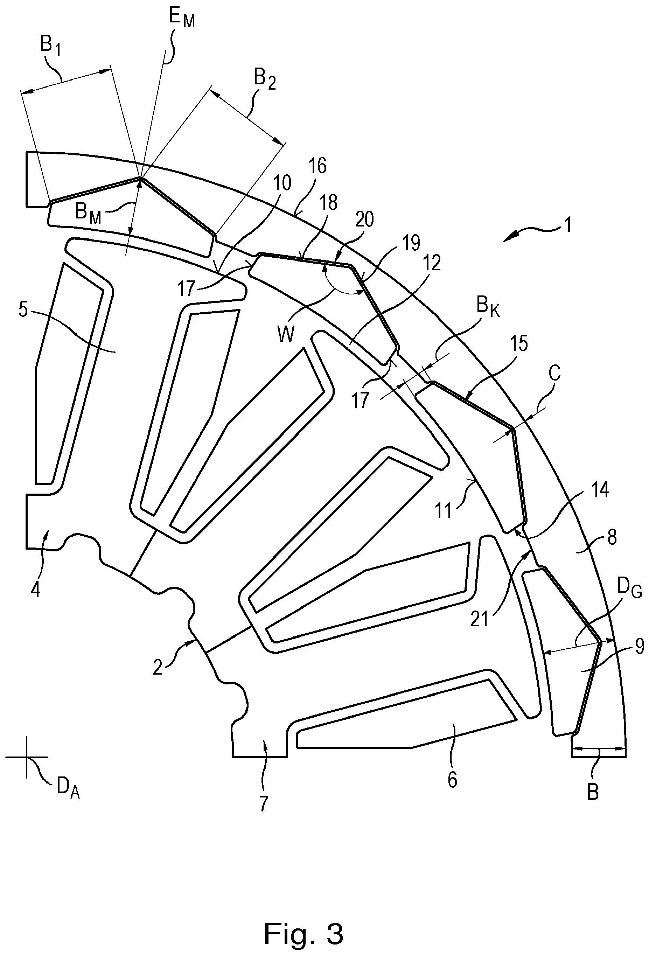

Im Folgenden wird anhand der Fig. 3 eine weitere Ausführungsform der vorliegenden Erfindung näher erläutert. Es wird in der Folge nur auf die wesentlichen Unterschiede eingegangen, weshalb unter Zuhilfenahme identischer Bezugszeichen ergänzend auf die vorangegangene Beschreibung Bezug genommen wird.

Der einzige Unterschied bei der Ausführungsform gemäß Fig. 3 besteht darin, dass der Rotorrückschluss 8 zwischen den Rotormagneten 9 in seiner maximalen Dicke B vergrößert ist, indem ein vorstehender Steg 21 vorgesehen ist. Dieser Steg 21 liegt teilweise an den Seiten 17 an und vergrößert hierdurch die Aufnahme 13. Hierdurch lässt sich auch eine bessere Fixierung der Rotormagnete 9 erzielen, weil die Stege 21 eine Klemmwirkung ausüben können.

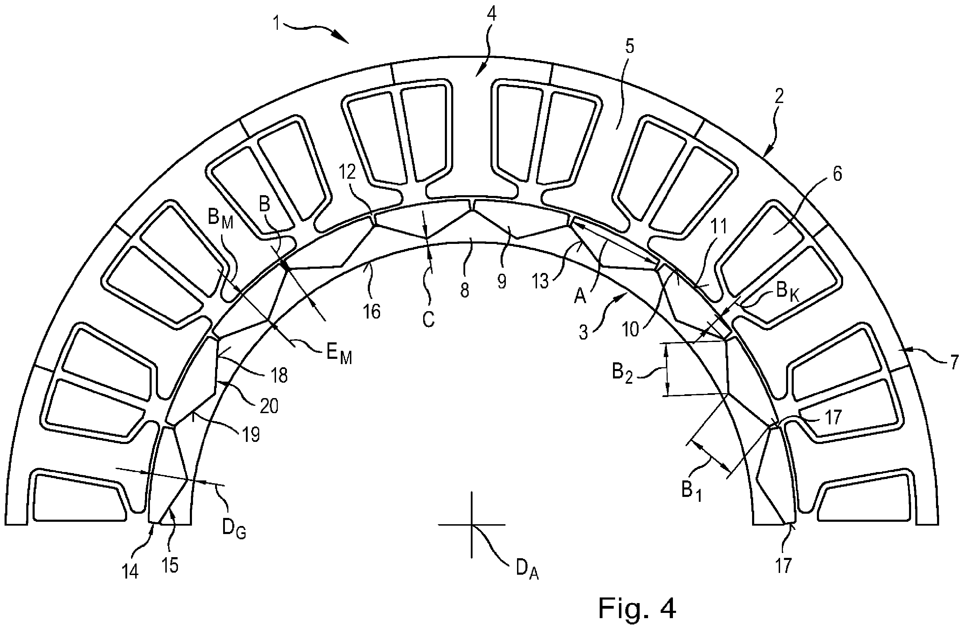

Im Folgenden wird anhand der Fig. 4 eine weitere Ausführungsform der vorliegenden Erfindung näher erläutert. Es wird nur auf die wesentlichen Unterschiede zu den vorangegangenen Ausführungsformen eingegangen, weshalb unter Verwendung derselben Bezugsziffern auf bau- und wirkungsgleiche Elemente ergänzend auf die obige Beschreibung Bezug genommen wird.

Der wesentliche Unterschied besteht darin, dass es sich bei der Ausführungsform der Figur 4 um einen Elektromotor 1 in Innenläuferausführung handelt. Der Rotor 3 ist demnach innen und der Stator 2 außen angeordnet. Die Fußbereiche der Statorzähne 5 bilden daher eine außenliegende Rückschlusshülse 7. In gleicher Weise ist der Rotorrückschluss 8 innenliegend und die Rotormagnete 9 sind in Aufnahmen 13 an der Außenseite des Rotorrückschlusses 8 angeordnet. Im Vergleich zu einer herkömmlichen Ausgestaltung kann die Gesamtdicke $D_G$ von Rotorrückschluss 8 und Rotormagnet 9 reduziert werden, wodurch im Inneren des Elektromotors 1 mehr freier Bauraum entsteht. Im vorliegenden Ausführungsbeispiel weist der Elektromotor 1 insgesamt zwanzig Rotormagnete 9 auf. Die geometrischen Verhältnisse erfüllen die angegebenen Bedingungen. Die Flächen 11 sind im vorliegenden Fall außenliegend und die Rotormagnete 9 entsprechend an dem Luftspaltdurchmesser konvex gekrümmt ausgeführt. Die Seite 16 des Rotorrückschlusses 8 liegt demnach innen.

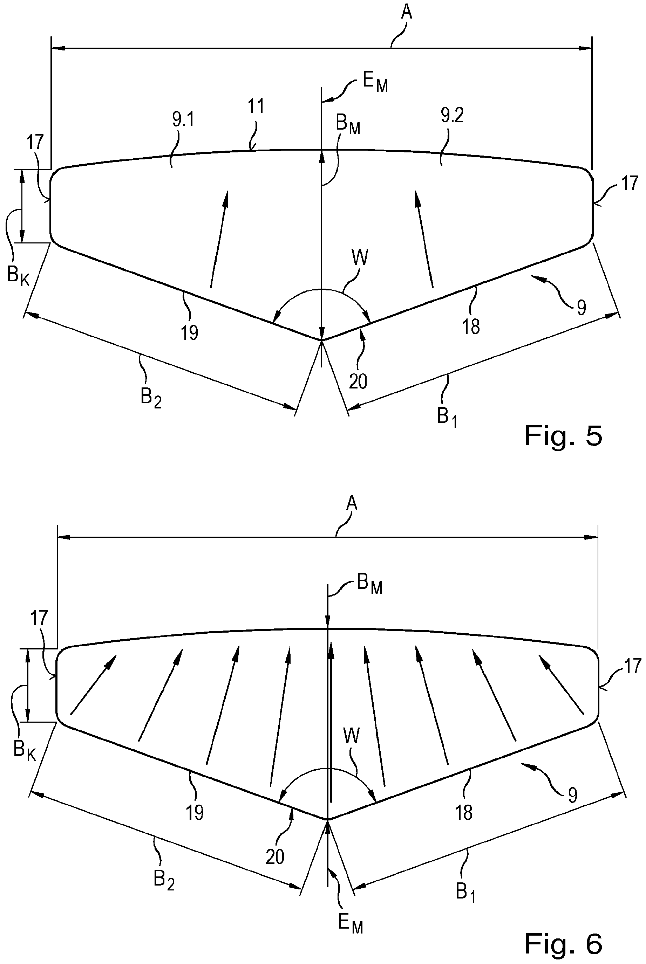

Anhand der Fig. 5 ist ein Rotormagnet 9 dargestellt, der aus zwei Teilmagneten 9.1 und 9.2 besteht. Die Teilmagnete 9.1 und 9.2 sind zur Mittelebene $E_M$ spiegelsymmetrisch ausgestaltet. Die Anisotropie-Richtungen der zwei Teilmagnete 9.1 und 9.2 sind eingezeichnet (siehe Pfeile). Durch entsprechende Auslegung der Teilmagnete 9.1 und 9.2 lässt sich eine leichtere Variation hinsichtlich der Anisotropie-Richtung des Rotormagneten 9 erzeugen.

Anhand der Fig. 6 ist ein Rotormagnet 9 dargestellt, der eine nicht einheitliche Anisotropie-Richtung aufweist (siehe die leicht voneinander abweichenden Pfeile). Entsprechend werden anisotrope Seltenerd-Magnete mit nicht einheitlicher Anisotropie-Richtung eingesetzt. Auch hierdurch lässt sich eine Variation erzielen.

Anhand der Figuren 7a bis 7d sind verschiedene Querschnittsausgestaltungen der Rotormagnete 9 dargestellt. Bei Figur 7a handelt es sich um den bereits bekannten Querschnitt mit dreiecksförmigem Teilbereich. Es besteht aber auch die Möglichkeit gemäß Figur 7b die Rückschlussfläche 20 konvex auszugestalten, wobei die Symmetrie zur Mittelebene $E_M$ bestehen bleibt. Die maximale Dicke $B_M$ und die minimale Dicke $B_K$ des Rotormagneten 9 bleibt im Vergleich zur Ausführungsform der Figur 7a gleich. Dies gilt übrigens auch für die im Folgenden beschriebenen Ausführungsformen der Figuren 7c und 7d. Bei der Ausführungsform der Figur 7c sind die beiden Teilbereiche 18 und 19 der Rückschlussfläche 20 jeweils konkav gekrümmt ausgeführt und bei der Ausführungsform der Figur 7d wird mit einer stumpfen Spitze gearbeitet, so dass der obere Querschnittsteil 15 trapezförmig ausgestaltet ist. Zur Bestimmung des Winkels W wird insbesondere bei den Ausführungsformen der Figuren 7b und 7c auf das Anlegen gedachter Linien zurückgegriffen, die jeweils die Stelle der maximalen Dicke $B_M$ und der minimalen Dicke $B_K$ schneiden. Weitere Optimierungen sind durch entsprechende Ausnutzung von Querschnittsformen der Rotormagnete 9 möglich.

Bezugszeichenliste

| | |
|---|---|
| 1 | Elektromotor |
| 2 | Stator |
| 3 | Rotor |
| 4 | Eisenkörper |
| 5 | Statorzähne |
| 6 | Statorspulen |

| | |
|---|---|
| 7 | Rückschlusshülse |
| 8 | Rotorrückschluss |
| 9 | Rotormagnet |
| 10 | Fläche |
| 11 | Fläche |
| 12 | Luftspalt |
| 13 | Aufnahme |
| 14 | Querschnittsteil |
| 15 | dreiecksförmiges Querschnittsteil |
| 16 | Seite |
| 17 | Seite |
| 18 | Teilbereich |
| 19 | Teilbereich |
| 20 | Magnetfluss-Austrittsfläche |
| 21 | Steg |
| | |
| A | Breite Rotormagnet |
| B | maximale Breite |
| $B_K$ | minimale Dicke (Rotormagnet) |
| $B_M$ | maximale Dicke (Rotormagnet) |
| C | minimaler Abstand (minimale Dicke) |
| $D_A$ | Drehachse |
| $D_G$ | Gesamtdicke (Rotor) |
| $E_M$ | Mittelebene |
| W | Winkel (Rotormagnet) |

**Patentansprüche**

1. Elektromotor (1), insbesondere bürstenloser Gleichstrommotor, mit einem Stator (2) und einem Rotor (3), der einen Rotorrückschluss (8) und mit dem Rotorrückschluss (8) verbundene Rotormagnete (9) aufweist, **dadurch gekennzeichnet, dass** die Rotormagnete (9) jeweils in einer Aufnahme (13) des Rotorrückschlusses (8) angeordnet sind und ein minimaler Abstand (C) einer Aufnahme (13) zu einer dem Stator (2) abgewandten Seite (16) des Rotorrückschlusses (8) kleiner ist als das 0,5-fache einer maximalen, zwischen zwei Rotormagneten (9) vorhandenen Dicke (B) des Rotorrückschlusses (8).

2. Elektromotor (1) nach Anspruch 1, **dadurch gekennzeichnet, dass** der minimale Abstand (C) einer Aufnahme (13) zu der dem Stator (2) abgewandten Seite (16) des Rotorrückschlusses (8) kleiner ist als das $0,\overline{3}$-fache der maximal zwischen zwei Rotormagneten (9) vorhandenen Dicke (B) des Rotorrückschlusses (8).

3. Elektromotor (1) nach Anspruch 1 oder 2, **dadurch gekennzeichnet, dass** ein Rotormagnet (9) im Querschnitt einen Dickenverlauf derart aufweist, dass die maximale Dicke ($B_M$) in einem mittleren Querschnittsbereich und die minimale Dicke ($B_K$) in einem am Rand befindlichen Querschnittsbereich liegt.

4. Elektromotor (1) nach Anspruch 3, **dadurch gekennzeichnet, dass** der Rotormagnet (9) im Querschnitt einen Dickenverlauf derart aufweist, dass sich die Dicke vom mittleren Bereich hin zum am Rand befindlichen Querschnittsbereich gleichbleibend oder stetig verringert.

5. Elektromotor (1) nach Anspruch 3 oder 4, **dadurch gekennzeichnet, dass** der Rotormagnet (9) zu einer diesen in zwei Hälften unterteilenden Mittelebene ($E_M$) einen spiegelsymmetrischen Dickenverlauf aufweist.

6. Elektromotor (1) nach einem der Ansprüche 1 bis 5, **dadurch gekennzeichnet, dass** ein Rotormagnet (9) aus mindestens zwei Teilmagneten (9.1, 9.2) zusammengesetzt ist.

7. Elektromotor (1) nach einem der Ansprüche 1 bis 6, **dadurch gekennzeichnet, dass** ein Rotormagnet (9) derart in der zugehörigen Aufnahme (13) im Rotorrückschluss (8) angeordnet ist, dass sich mindestens 50 % der Querschnittsfläche des Rotormagneten (9) mit der Querschnittsfläche der Aufnahme (13) überdecken.

8. Elektromotor (1) nach einem derAnsprüche 1 bis 6, **dadurch gekennzeichnet, dass** ein Rotormagnet (9) derart in der zugehörigen Aufnahme (13) im Rotorrückschluss (8) angeordnet ist, dass sich mindestens 66,$\overline{6}$ % der Querschnittsfläche des Rotormagneten (8) mit der Querschnittsfläche der Aufnahme (13) überdecken.

9. Elektromotor (1) nach Anspruch 7 oder 8, **dadurch gekennzeichnet, dass** die Querschnittsfläche der Aufnahme eine Dreiecksform aufweist und dass zumindest ein Teilbereich (15) des Rotormagnets (8) eine daran angepasste Form aufweist.

10. Elektromotor (1) nach einem der Ansprüche 1 bis 9, **dadurch gekennzeichnet, dass** der Rotormagnet (8) eine Breite A und der Rückschluss (8) eine maximale Dicke B zwischen zwei Rotormagneten (8) aufweist und ein Verhältnis V von A zu B im Bereich von 3 bis 4 liegt.

11. Elektromotor (1) nach einem der Ansprüche 1 bis 10, **dadurch gekennzeichnet, dass** zwei auf der Rückschlussseite (20) des Rotormagneten (8) jeweils an der Stelle der minimalen Dicke ($B_K$) des Rotormagneten (8) und an der nächstliegenden Stelle der maximalen Dicke ($B_M$) des Rotormagneten (8) anliegend gedachte Linien einen Winkel (W) im Bereich von 100° bis 160°, bevorzugt von 110° bis 150°, und weiter bevorzugt von 112° bis 124° einschließen.

12. Elektromotor (1) nach einem der Ansprüche 1 bis 11, **dadurch gekennzeichnet, dass** die Gesamtbreite ($B_1$, $B_2$) der halben Rückschlussseite (20) des Rotormagneten (8) dem 1,5-fachen bis 3,0-fachen, bevorzugt dem 1,75-fachen bis 2,5-fachen der maximalen Dicke (B) des Rückschlusses (8) zwischen zwei Rotormagneten (9) entspricht.

13. Elektromotor (1) nach einem der Ansprüche 1 bis 12, **dadurch gekennzeichnet, dass** der Rotor (3) als um den Stator (2) umlaufender Außenrotor ausgebildet ist.

14. Elektromotor (1) nach einem der Ansprüche 1 bis 12, **dadurch gekennzeichnet, dass** der Rotor (3) als innerhalb des Stators (2) laufender Innenrotor ausgebildet ist.

15. Rotor (3) für einen Elektromotor (1) nach einem der Ansprüche 1 bis 14, mit einem Rotorrückschluss (8) und in Aufnahmen (13) des Rotorrückschlusses (8) angeordneten Rotormagneten (9), wobei ein minimaler Abstand (C) der Aufnahme (13) zu einer am Stator (2) abgewandten Seite (16) des Rotorrückschlusses (8) kleiner ist als das 0,5-fache einer maximalen, zwischen zwei Rotormagneten (9) vorhandenen Dicke (B) des Rotorrückschlusses (8).

Fig. 1

Fig. 2

Fig. 3

Fig. 4

EP 3 920 377 A1

Fig. 5

Fig. 6

$E_M$  $B_M$
W
$B_K$  $B_K$
9

## Fig. 7a

$E_M$  $B_M$
W
$B_K$  $B_K$
9

## Fig. 7b

9
$B_M$
W
$B_K$  $B_K$
$E_M$

## Fig. 7c

$B_M$  $B_M$
W
9
$B_K$  $B_K$
$E_M$

## Fig. 7d

Europäisches
Patentamt

European
Patent Office

Office européen
des brevets

**EUROPÄISCHER RECHERCHENBERICHT**

Nummer der Anmeldung

EP 20 17 8496

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 8 575 812 B2 (WESTERMARK MAGNUS [SE]; HERTZMAN MIKAEL [SE]; TRIMBLE AB [SE]) 5. November 2013 (2013-11-05) | 1-5,7-15 | INV. H02K1/27 |
| Y | * Spalte 3, Zeile 29 - Spalte 5, Zeile 52 * | 6 | |
| | * Spalte 6, Zeile 12 - Zeile 16; Abbildungen 1-5 * ----- | | |
| Y | EP 0 844 722 A1 (MAGNET MOTOR GMBH [DE]) 27. Mai 1998 (1998-05-27) * Spalte 5, Zeile 22 - Zeile 55; Abbildung 5 * ----- | 6 | |
| A,D | US 2014/312745 A1 (NICOLOFF WILLIAM [US] ET AL) 23. Oktober 2014 (2014-10-23) * das ganze Dokument * ----- | 1-15 | |

**RECHERCHIERTE SACHGEBIETE (IPC)**

H02K

Der vorliegende Recherchenbericht wurde für alle Patentansprüche erstellt

| Recherchenort | Abschlußdatum der Recherche | Prüfer |
|---|---|---|
| München | 3. November 2020 | Türk, Severin |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 17 8496

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-11-2020

| Im Recherchenbericht angeführtes Patentdokument | Datum der Veröffentlichung | Mitglied(er) der Patentfamilie | Datum der Veröffentlichung |
|---|---|---|---|
| US 8575812 B2 | 05-11-2013 | EP 1766756 A2<br>JP 5073487 B2<br>JP 2008505598 A<br>US 2009039726 A1<br>WO 2006005511 A2 | 28-03-2007<br>14-11-2012<br>21-02-2008<br>12-02-2009<br>19-01-2006 |
| EP 0844722 A1 | 27-05-1998 | DE 19648758 A1<br>EP 0844722 A1 | 04-06-1998<br>27-05-1998 |
| US 2014312745 A1 | 23-10-2014 | US 2014312745 A1<br>WO 2013025550 A2 | 23-10-2014<br>21-02-2013 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140312745 A1